# EUROPEAN PATENT APPLICATION

(11) **EP 4 644 586 A1**
(43) Date of publication of application: **05.11.2025**
(21) Application number: 23908763.8
(22) Date of filing: 13.01.2023
(51) Int. Cl.: C25B 11/054, C25B 11/02, C25B 1/04, C25B 3/23, C25B 3/07, C25B 3/05

(54) **POROUS MONOLITHIC CATALYST WITH CORE-SHELL STRUCTURE, AND PREPARATION METHOD THEREFOR AND USE THEREOF**

(30) Priority: 27.12.2022 CN 202211684912
(71) Applicant: Ningbo Institute of Materials Technology and Engineering, Chinese Academy of Sciences, Ningbo, Zhejiang 315201 (CN)
(72) Inventor: CHEN, Chunlin, Ningbo, Zhejiang 315201 (CN); FAN, Shilin, Ningbo, Zhejiang 315201 (CN); ZHU, Bin, Ningbo, Zhejiang 315201 (CN); ZHANG, Jian, Ningbo, Zhejiang 315201 (CN)
(74) Representative: Cabinet Chaillot
(86) International application number: PCT/CN2023/071997
(87) International publication number: WO 2024/138804

(57) **Abstract**

The present disclosure discloses an integral catalyst with porous core-shell structure and a preparation method and an application thereof. With a transition metal as active material, a stable bifunctional catalyst capable of performing hydrogen evolution and biomass oxidation at the same time is prepared by epitaxial growth and air calcination; and, the process efficiencies of internal diffusion, external diffusion, adsorption, reaction and desorption of reactive molecules and product molecules and so on can be increased by the porous structure of the catalyst, realizing increase of the catalyst activity.

## Description

### TECHNICAL FIELD

The present disclosure relates to the field of catalyst technologies and in particular to an integral catalyst with porous core-shell structure and a preparation method and an application thereof.

### BACKGROUND

Compared with fossil energies such as coal, petroleum and natural gas and the like, hydrogen energy has the advantages of cleanness, no pollution, renewability and broad sources and so on. Based on production source, the hydrogen energy can be classified into "grey hydrogen", "blue hydrogen" and "green hydrogen". The "green hydrogen" is mainly produced by renewable energies such as wind energy, solar energy and biomass energy and the like, making itself the most environment-friendly. Just for this reason, the development of the green hydrogen energy has become an important means for developing the green economy and achieving the carbon neutralization target.

Hydrogen preparation by electrolyzed water is one of important means for preparing the green hydrogen. How to design and prepare an appropriate electrocatalyst so as to improve the efficiency of the hydrogen preparation by the electrolyzed water has become a key and difficult point in the research work of the hydrogen preparation by the electrolyzed water. In addition, in the process of the hydrogen preparation by the electrolyzed water, due to complex multi-electron transfer process involved in an oxygen evolution reaction of an anode, the reaction kinetics becomes slow, leading to relatively low reaction activity of the electrolyzed water, and limiting the hydrogen production rate of a cathode. The patent CN112538636A discloses a method of preparing hydrogen by electrolyzed water while electrocatalyzing 5-hydroxymethylfurfural to prepare 2,5-furandicarboxylic acid by oxidation. In this method, an oxygen evolution reaction and a biomass oxidation are coupled to two poles of a same electrocatalytic reaction, so as to improve the hydrogen preparation efficiency and produce a high-valued-added bio-based platform compound. An integral electrode used in this technical solution includes a carrier and a catalytic active substance supported on the carrier. The catalytic active substance includes a nitrogen-doped carbon nanowire wrapping tricobalt tetraoxide particles. This catalyst has poor stability and its active sites are liable to influence of acid, base, and corrosive environment in the reaction process, and thus the active substance structure of the catalyst can be destroyed, leading to deactivation of the catalyst. Furthermore, although this catalyst can be used for the oxygen evolution reaction, its catalytic activity is relatively low, leading to failure to achieve efficient hydrogen preparation.

### SUMMARY

For the shortcomings of the prior arts, the present disclosure aims to solve the problem of how to improve stability and catalytic activity of a catalyst.

In order to solve the above technical problems, a first aspect of the present disclosure provides a preparation method of an integral catalyst with porous core-shell structure, which includes the following steps:
at step S1, immersing a metal cobalt substrate in an oxalic acid solution, and growing a cobalt oxalate micron wire or micron rod on a surface of the metal cobalt substrate to obtain a cobalt oxalate precursor;
at step S2, performing high-temperature calcination on the cobalt oxalate precursor in an air atmosphere to obtain a tricobalt tetraoxide precursor with porous structure;
at step S3, placing the tricobalt tetraoxide precursor into a high-temperature hydrogen atmosphere for reduction to obtain a cobalt intermediate with stable porous structure;
at step S4, soaking the cobalt intermediate in a nickel salt solution, and epitaxially growing a cobalt-nickel nano structure on a surface of the cobalt micron wire or micron rod to obtain an integral catalyst with porous core-shell structure.

In the present disclosure, with a transition metal as active material, a stable bifunctional catalyst capable of performing hydrogen evolution and biomass oxidation at the same time is prepared by epitaxial growth and air calcination; and, the process efficiencies of internal diffusion, external diffusion, adsorption, reaction and desorption of reactive molecules and product molecules and so on can be increased by the porous structure of the catalyst, realizing increase of the catalyst activity.

In a preferable or optional example, the step S2 specifically includes: placing the cobalt oxalate precursor into a tubular furnace and heating to 100 to 800°C at a heating rate of 1 to 10°C/min in the air atmosphere and holding the temperature for 1 to 5h and then cooling down to room temperature so as to obtain a tricobalt tetraoxide precursor. The step of the air calcination can not only maintain a tetragonal column structure of cobalt oxalate not bent and kinked but also enable the catalyst to have porous structure, increasing the specific surface area of the catalyst and improving the performance of the catalyst.

In a preferable or optional example, the step S3 specifically includes: placing the tricobalt tetraoxide precursor into a tubular furnace, and heating to 100 to 550°C at the heating rate of 1 to 10°C/min in the hydrogen atmosphere, and holding the temperature for 1 to 5h and then cooling down to room temperature so as to obtain a cobalt intermediate. In this step, the tricobalt tetraoxide precursor is reduced by hydrogen into a metal cobalt so as to obtain a cobalt intermediate with stable structure; with a given gas flowrate, a reduction product can be carried away quickly; under high temperature, hydrogen has high reductibility and with limited temperature and holding time, the tricobalt tetraoxide precursor can be completely reduced into the cobalt intermediate.

In a preferable or optional example, the metal cobalt substrate is selected from any one of metal cobalt foam, cobalt sheet, cobalt foil and cobalt net. In the preparation method, a catalyst with high activity can be obtained by using an inexpensive transition metal as active material instead of using a precious metal, leading to a low production cost.

In a preferable or optional example, in the step S1, a molar ratio of the metal cobalt substrate to oxalic acid is 1:5.5 to 28; the reaction time of the epitaxial growth is 0.25 to 4h, and the reaction temperature is 20 to 80°C. In this step, by in-situ expitaxial growth, the cobalt oxalate precursor with stable structure can be obtained. The molar ratio of the metal cobalt substrate to the oxalic acid and the reaction time and the reaction temperature of the epitaxial growth can affect the structure of the material. Within the above limitation scope, on the surface of the cobalt substrate, the cobalt oxalate micron wire or micron rod precursor with stable structure can be grown and thus sufficient specific surface area can be provided.

In a preferable or optional example, in the step S4, the concentration of the nickel salt solution is 10 to 30mM, and the solute of the nickel salt solution is selected from any one or combination of nickel sulfate, nickel nitrate, and nickel chloride; the reaction temperature of the epitaxial growth is 10 to 60°C and the reaction time is 10 to 80h. In this step, by corrosion, reduction and ion exchange and the like, the cobalt-nickel nano structure is epitaxially grown on the surface of the cobalt intermediate of the cobalt, and the metal activity of the metal cobalt is strong. Therefore, the nickel ions can etch the metal cobalt to produce cobalt ions and at the same time, a nickel layer is grown on the porous structure to increase the active components.

A second aspect of the present disclosure provides an integral catalyst with porous core-shell structure which is prepared by the above method. The integral catalyst with porous core-shell structure in the present disclosure has a very high structural stability and has a porous structure to increase a specific surface area, thereby intensifying the performance of the catalyst. Furthermore, the cobalt-nickel nano structure has very high specific surface area and catalytic active sites such that the catalyst can have good activity. The cobalt substrate has high conductivity and the surface micronano cobalt component enables the electrochemical onset potential of the catalyst to be lower and with introduction of nickel component, the catalyst has high current density.

A third aspect of the present disclosure provides an application of the above integral catalyst with porous core-shell structure, where the integral catalyst with porous core-shell structure is used as a cathode of an electrolysis system to perform electrolytic hydrogen evolution; or, the integral catalyst with porous core-shell structure is used as an anode of the electrolysis system to perform biomass oxidation; or, the integral catalyst with porous core-shell structure is used as an anode and a cathode of the electrolysis system respectively to perform electrolytic hydrogen evolution and biomass oxidation at the same time.

The integral catalyst with porous core-shell structure has two functions of hydrogen evolution and biomass oxidation and thus can efficiently prepare hydrogen while obtaining a high-purity bio-based platform compound. The electrolyte for the catalytic system is a potassium hydroxide and/or sodium hydroxide solution.

In conclusion, compared with the prior arts, the present disclosure has the following beneficial effects.
(1) For the integral catalyst with porous core-shell structure in the present disclosure, with an inexpensive transition metal as active material, a catalyst with good stability can be prepared by epitaxial growth and air calcination; the porous structure of the catalyst can effectively improve the catalytic activity and hence enable the catalyst to have two functions of hydrogen evolution and biomass oxidation.
(2) For the integral catalyst with porous core-shell structure, the metal cobalt substrate has high conductivity and the surface micronano cobalt component enables the electrochemical onset potential of the catalyst to be lower and the growth of the nickel layer on the porous structure enables the catalyst to have high current density, which greatly intensifies the reactive activity of the catalyst. Therefore, the prepared catalyst has excellent industrial application prospect.
(3) The preparation method of the integral catalyst with porous core-shell structure is easy to operate and has strong repeatability. The micronano structure obtained by in-situ epitaxial growth has good stability, and the step of the air calcination can not only maintain the tetragonal column structure of the cobalt oxalate precursor not bent and kinked but also enable the catalyst to have porous structure, increasing the specific surface area of the catalyst and improving the performance of the catalyst.
(4) The integral catalyst with porous core-shell structure in the present disclosure has the advantages of stable structure, many catalytic active sites, high catalytic activity and high catalytic activity on water and biomass, and thus can satisfy the current density desired by the industrial production and realize synchronous efficient preparation of hydrogen and high-purity bio-based platform compound.

### BRIEF DESCRIPTIONS OF THE DRAWINGS

FIG. 1 is an X-ray diffraction diagram illustrating a cobalt oxalate precursor according to an example 1 of the present disclosure.
FIG. 2 is a scanning electron microscopy image illustrating a tricobalt tetraoxide precursor according to an example 1 of the present disclosure.
FIG. 3 is a scanning electron microscopy image illustrating an integral catalyst with porous core-shell structure according to an example 1 of the present disclosure.
FIG. 4 is a linear scanning voltammogram illustrating hydrogen evolution of an integral catalyst with porous core-shell structure at a cathode of an electrolyte according to an example 9 of the present disclosure.
FIG. 5 is a result diagram illustrating oxidation reaction of an integral catalyst with porous core-shell structure as an anode on 5-hydroxymethylfurfural according to an example 10 of the present disclosure.
FIG. 6 is a result diagram illustrating a hydrogen evolution reaction of an integral catalyst with porous core-shell structure as a cathode according to an example 11 of the present disclosure.

### DETAILED DESCRIPTIONS OF EMBODIMENTS

In order to make the above objects, features and advantages of the present disclosure clearer and more intelligible, the specific examples of the present disclosure will be detailed below in combination with drawings.

It should be understood that the terms in the present disclosure are used only to describe specific examples rather than to limit the present disclosure. Furthermore, the numerical range of the present disclosure shall be understood as further specifically disclosing each medium value between an upper limit and a lower limit of the range. Any stated value, or any medium value within the stated range, and any other stated value or each smaller range between the medium values within the above range shall also be included in the present disclosure. The upper limit and lower limit of these smaller ranges can be independently included in or excluded from the ranges.

Without departing from the spirit or scope of the present disclosure, various improvements and changes can be made to the specific examples of the present disclosure, which is apparent to those skilled in the arts. It is apparent for those skilled in the arts to obtain other examples from the specification of the present disclosure. The specification and the examples of the present disclosure are only illustrative.

One specific example of the present disclosure provides an integral catalyst with porous core-shell structure, which is prepared by the following method.

At step S1, a metal cobalt substrate is immersed in an oxalic acid solution and stood unstirred, and by using an etching effect of oxalic acid on cobalt, a cobalt oxalate micron wire or micron rod precursor with stable structure is grown on a surface of the cobalt substrate.

In a specific example, the metal cobalt substrate is selected from any one of metal cobalt foam, cobalt sheet, cobalt foil and cobalt net; the typical metal cobalt substrate is a foam cobalt, and the metal cobalt substrate with three-dimensional structure can expose many active sites, helping increase the stability of the electrocaltalyst.

In a specific example, the solvent in the oxalic acid solution is water with a concentration of 6 to 30mM. The typical concentration includes 6mM, 8mM, 10mM, 12mM, 15mM, 20mM, 22mM, 25mM, 28mM and 30mM and so on. The molar ratio of the metal cobalt substrate to oxalic acid is 1:5.5 to 28.

In a specific example, in the step S1, the reaction time of the epitaxial growth is 0.25 to 4h, and the typical epitaxial growth time includes 0.25h, 0.5h, 1h, 2h, 2.5h, 3h and 4h and so on. The reaction temperature of the epitaxial growth is 20 to 80°C, and the typical epitaxial growth temperature includes 25°C, 35°C, 45°C, 50°C, 60°C and 80°C and so on. The epitaxial growth is carried out under mild condition and the preparation method is simple, making it easy to realize scale production.

At step S2, high-temperature calcination is performed on the cobalt oxalate precursor in an air atmosphere to obtain a tricobalt tetraoxide precursor with porous structure, and the original structure of the cobalt oxalate micron rod is maintained not bent and kinked. The specific step is as follows: the cobalt oxalate precursor is placed into a tubular furnace and heated to a calcination temperature in the air atmosphere and held for a period of time and then cooled down to room temperature so as to obtain the tricobalt tetraoxide precursor.

In a specific example, in the air atmosphere, heating is performed to 100 to 800°Cat the heating rate of 1~10°C/min and held for 1 to 5h. The typical calcination temperature includes 100°C, 200°C, 250°C, 300°C, 400°C, 500°C, 600°C, 700°C, 750°C and 800°C and so on. The typical holding time includes 1h, 1.5h, 2h, 2.5h, 3h, 4h and 5h and so on.

The step of the air calcination can not only maintain the tetragonal column structure of the cobalt oxalate not bent and kinked but also enable the catalyst to have porous structure, increasing the specific surface area of the catalyst and improving the performance of the catalyst.

At step S3, the tricobalt tetraoxide precursor is placed into a hydrogen atmosphere for reduction to obtain a cobalt intermediate. The specific step is as follows: the tricobalt tetraoxide precursor is placed into a tubular furnace with hydrogen introduced and heated to a set temperature and then held and then cooled down to room temperature so as to obtain the cobalt intermediate with stable structure.

In a specific example, the gas volume flowrate of the hydrogen is 5 to 100mL/min; the tubular furnace is heated to 100 to 550°C at the heating rate of 1 to 5°C/min and held for 1 to 5h. The typical reduction temperature includes 100°C, 200°C, 250°C, 300°C, 400°C, 500°C and 550°C and so on. The typical holding time includes 1h, 1.5h, 2h, 2.5h, 3h, 4h and 5h and so on.

Under high temperature, hydrogen has high reductibility and with limited temperature and holding time, the tricobalt tetraoxide precursor can be completely reduced into the cobalt intermediate.

At step S4, the cobalt intermediate is placed into a nickel salt solution, by corrosion, displacement and ion exchange and the like, a cobalt-nickel nano structure is epitaxially grown on a surface of the cobalt micronano structure, so as to obtain a porous core-shell structured integral catalyst with rich catalytic active sites and high catalytic activity.

In a specific example, the solvent of the nickel salt solution is water and the solute is selected from any one or combination of nickel sulfate, nickel nitrate and nickel chloride, and preferably, from nickel nitrate.

In a specific example, the concentration of the nickel salt solution is 10 to 30mM, and the typical concentration includes 10M, 12M, 15M, 20M, 22M, 25M and 30M and so on.

In a specific example, in the step S4, the reaction temperature of the epitaxial growth is 10 to 60°C, the typical reaction temperature includes 10°C, 15°C, 20°C, 22°C, 25°C, 28°C, 30°C, 45°C and 58°C and so on. The reaction time of the epitaxial growth is 10 to 80h and the typical reaction time includes 10h , 20h, 24h, 30h, 38h, 40h, 60h and 80h and so on.

The above preparation method is simple to operate and has strong repeatability, and the catalyst with high activity can be obtained without using precious metal. The catalyst with micronano structure obtained by in-situ epitaxial growth has better structural stability. The introduction of the step of the air calcination can enable the catalyst to have a porous structure which increases the process efficiencies of internal diffusion, external diffusion, adsorption, reaction and desorption of reactive molecules and product molecules and so on, realizing increase of the catalyst activity.

A specific example of the present disclosure further provides an application of the above integral catalyst with porous core-shell structure to hydrogen evolution and/or biomass oxidation.

The specific application method of the hydrogen evolution is as follows: the above integral catalyst with porous core-shell structure is used as a cathode, a potassium hydroxide and/or sodium hydroxide solution is added to the electrolytic cell as an electrolyte, and the working electrode is immersed in the electrolyte to perform electrolytic hydrogen evolution reaction.

The specific application method of the biomass oxidation is as follows: the above integral catalyst with porous core-shell structure is used as an anode, a potassium hydroxide and/or sodium hydroxide solution containing biomass is added to the electrolytic cell as an electrolyte, and the working electrode is immersed in the electrolyte to perform biomass oxidation reaction.

The specific application method of performing hydrogen evolution and biomass oxidation at the same time is as follows: the above integral catalyst with porous core-shell structure is used as an anode and a cathode respectively, a potassium hydroxide and/or sodium hydroxide solution containing biomass is added to the electrolytic cell as an electrolyte, and the working electrode is immersed in the electrolyte to enable the cathode to perform electrolytic hydrogen evolution reaction and the anode to perform biomass oxidation reaction.

The technical effects of the present disclosure will be described below with specific examples.

### Example 1

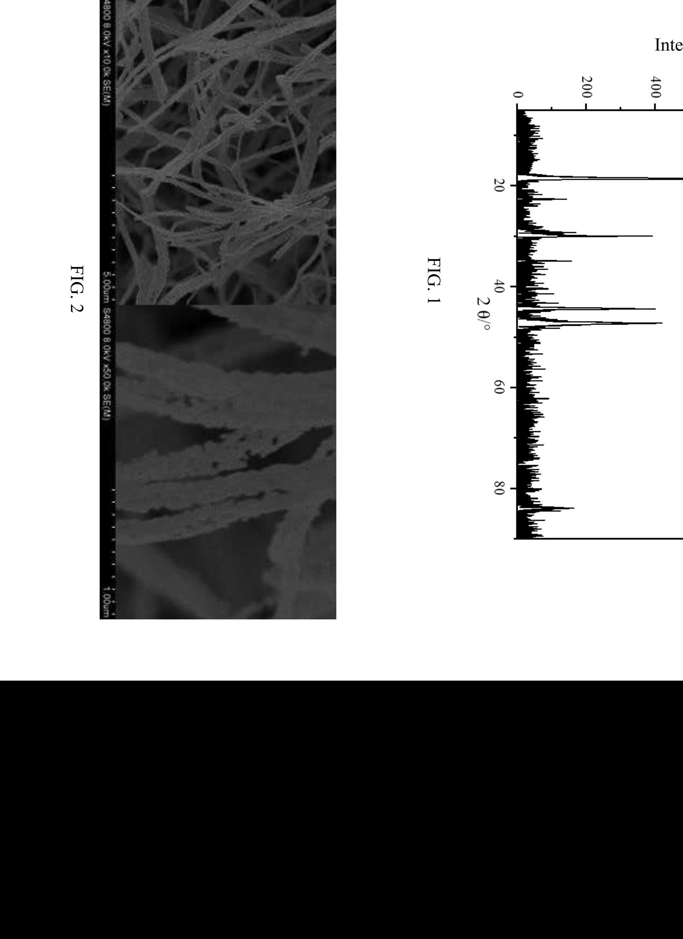

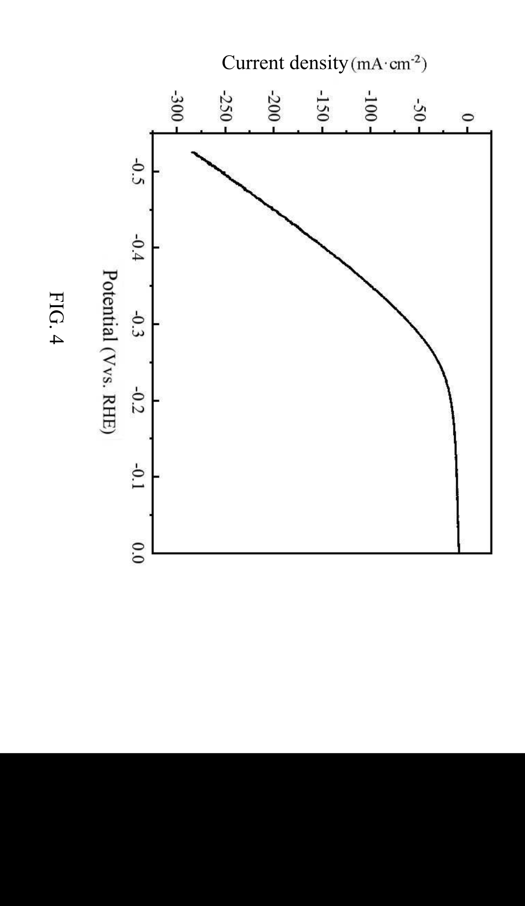

(1) A cobalt foam of 0.5×3cm² was taken and ultrasonically cleaned with anhydrous ethanol and deionized water respectively for 10min and dried for later use.
(2) The cleaned cobalt foam was immersed in 50ml of 30mM oxalic acid solution for standing and underwent constant temperature reaction for 2h at the temperature of 50°C. After the completion of the reaction, the reaction product was taken out and cleaned with deionized water and then placed into an 80°C drying oven to be dried for 2h to obtain a cobalt oxalate precursor. The X-ray diffraction result of the cobalt oxalate precursor is as shown in FIG. 1.
(3) The cobalt oxalate precursor was placed into a tubular furnace, and heated to 600°C at the heating rate of 5°C/min in the air atmosphere and held for 2h and then cooled down to room temperature to obtain a tricobalt tetraoxide precursor. The surface morphology of the tricobalt tetraoxide precursor is as shown in FIG. 2, showing it has a porous structure.
(4) The tricobalt tetraoxide precursor was placed into a hydrogen atmosphere tubular furnace with a flowrate of 5ml/min and then heated to 500°C at the heating rate of 5°C/min and held for 2h and then cooled down to room temperature so as to obtain a cobalt intermediate.
(5) The cobalt intermediate was soaked in a 10mM nickel sulfate solution for standing, and underwent constant temperature reaction for 38h at the temperature of 25°C. After the completion of the reaction, the reaction product was cleaned with deionized water and then placed into an 80°C drying oven to be dried for 2h to obtain an integral catalyst with porous core-shell structure. The scanning electron microscopy image of the integral catalyst with porous core-shell structure is as shown in FIG. 3, showing a nickel layer is grown on the porous structure.

### Example 2

(1) A cobalt sheet of 0.5×3cm² was taken and ultrasonically cleaned with anhydrous ethanol and deionized water respectively for 10min and dried for later use.
(2) The cleaned cobalt sheet was immersed in 50ml of 20mM oxalic acid solution for standing and underwent constant temperature reaction for 2h at the temperature of 50°C. After the completion of the reaction, the reaction product was taken out and cleaned with deionized water and then placed into an 80°C drying oven to be dried for 2h to obtain a cobalt oxalate precursor.
(3) The cobalt oxalate precursor was placed into a tubular furnace and heated to 500°C at the heating rate of 5°C/min in the air atmosphere and held for 2h and then cooled down to room temperature to obtain a tricobalt tetraoxide precursor.
(4) The tricobalt tetraoxide precursor was placed into a hydrogen atmosphere tubular furnace with a flowrate of 5ml/min and held for 30min, and then heated to 500°C at the heating rate of 5°C/min and held for 2h and then cooled down to room temperature so as to obtain a cobalt intermediate.
(5) The cobalt intermediate was soaked in a 10mM nickel sulfate solution for standing, and underwent constant temperature reaction for 24h at the temperature of 25°C. After the completion of the reaction, the reaction product was cleaned with deionized water and then placed into an 80°C drying oven to be dried for 2h to obtain an integral catalyst with porous core-shell structure.

### Example 3

(1) A cobalt foam of 0.5×3cm² was taken and ultrasonically cleaned with anhydrous ethanol and deionized water respectively for 10min and dried for later use.
(2) The cleaned cobalt foam was immersed in 50ml of 22mM oxalic acid solution for standing and underwent constant temperature reaction for 2h at the temperature of 80°C. After the completion of the reaction, the reaction product was taken out and cleaned with deionized water and then placed into an 80°C drying oven to be dried for 2h to obtain a cobalt oxalate precursor.
(3) The cobalt oxalate precursor was placed into a tubular furnace, and heated to 800°C at the heating rate of 10°C/min in the air atmosphere and held for 1h and then cooled down to room temperature to obtain a tricobalt tetraoxide precursor.
(4) The tricobalt tetraoxide precursor was placed into a hydrogen atmosphere tubular furnace with a flowrate of 5ml/min and then heated to 500°C at the heating rate of 5°C/min and held for 2h and then cooled down to room temperature so as to obtain a cobalt intermediate.
(5) The cobalt intermediate was soaked in a 30mM nickel nitrate solution for standing, and underwent constant temperature reaction for 38h at the temperature of 25°C. After the completion of the reaction, the reaction product was cleaned with deionized water and then placed into an 80°C drying oven to be dried for 2h to obtain an integral catalyst with porous core-shell structure.

### Example 4

(1) A cobalt foam of 0.5×3cm² was taken and ultrasonically cleaned with anhydrous ethanol and deionized water respectively for 10min and dried for later use.
(2) The cleaned cobalt foam was immersed in 50ml of 25mM oxalic acid solution for standing and underwent constant temperature reaction for 3h at the temperature of 35°C. After the completion of the reaction, the reaction product was taken out and cleaned with deionized water and then placed into an 80°C drying oven to be dried for 2h to obtain a cobalt oxalate precursor.
(3) The cobalt oxalate precursor was placed into a tubular furnace, and heated to 100°C at the heating rate of 2°C/min in the air atmosphere and held for 5h and then cooled down to room temperature to obtain a tricobalt tetraoxide precursor.
(4) The tricobalt tetraoxide precursor was placed into a hydrogen atmosphere tubular furnace with a flowrate of 20ml/min and then heated to 200°C at the heating rate of 5°C/min and held for 3h and then cooled down to room temperature so as to obtain a cobalt intermediate.
(5) The cobalt intermediate was soaked in a 25mM nickel nitrate solution for standing, and underwent constant temperature reaction for 30h at the temperature of 25°C. After the completion of the reaction, the reaction product was cleaned with deionized water and then placed into an 80°C drying oven to be dried for 2h to obtain an integral catalyst with porous core-shell structure.

### Example 5

(1) A cobalt foil of 0.5×3cm² was taken and ultrasonically cleaned with anhydrous ethanol and deionized water respectively for 10min and dried for later use.
(2) The cleaned cobalt foil was immersed in 50ml of 15mM oxalic acid solution for standing and underwent constant temperature reaction for 2.5h at the temperature of 45°C. After the completion of the reaction, the reaction product was taken out and cleaned with deionized water and then placed into an 80°C drying oven to be dried for 2h to obtain a cobalt oxalate precursor.
(3) The cobalt oxalate precursor was placed into a tubular furnace, and heated to 600°C at the heating rate of 6°C/min in the air atmosphere and held for 2.5h and then cooled down to room temperature to obtain a tricobalt tetraoxide precursor.
(4) The tricobalt tetraoxide precursor was placed into a hydrogen atmosphere tubular furnace with a flowrate of 20ml/min and then heated to 250°C at the heating rate of 2°C/min and held for 3h and then cooled down to room temperature so as to obtain a cobalt intermediate.
(5) The cobalt intermediate was soaked in a 15mM nickel nitrate solution for standing, and underwent constant temperature reaction for 20h at the temperature of 58°C. After the completion of the reaction, the reaction product was cleaned with deionized water and then placed into an 80°C drying oven to be dried for 2h to obtain an integral catalyst with porous core-shell structure.

### Example 6

(1) A cobalt foil of 0.5×3cm² was taken and ultrasonically cleaned with anhydrous ethanol and deionized water respectively for 10min and dried for later use.
(2) The cleaned cobalt foil was immersed in 50ml of 10mM oxalic acid solution for standing and underwent constant temperature reaction for 4h at the temperature of 80°C. After the completion of the reaction, the reaction product was taken out and cleaned with deionized water and then placed into an 80°C drying oven to be dried for 2h to obtain a cobalt oxalate precursor.
(3) The cobalt oxalate precursor was placed into a tubular furnace, and heated to 550°C at the heating rate of 8°C/min in the air atmosphere and held for 4h and then cooled down to room temperature to obtain a tricobalt tetraoxide precursor.
(4) The tricobalt tetraoxide precursor was placed into a hydrogen atmosphere tubular furnace with a flowrate of 30ml/min and then heated to 350°C at the heating rate of 5°C/min and held for 2.5h and then cooled down to room temperature so as to obtain a cobalt intermediate.
(5) The cobalt intermediate was soaked in a 12mM nickel nitrate solution for standing, and underwent constant temperature reaction for 80h at the temperature of 28°C. After the completion of the reaction, the reaction product was cleaned with deionized water and then placed into an 80°C drying oven to be dried for 2h to obtain an integral catalyst with porous core-shell structure.

### Example 7

(1) A cobalt sheet of 0.5×3cm² was taken and ultrasonically cleaned with anhydrous ethanol and deionized water respectively for 10min and dried for later use.
(2) The cleaned cobalt sheet was immersed in 50ml of 30mM oxalic acid solution for standing and underwent constant temperature reaction for 0.5h at the temperature of 50°C. After the completion of the reaction, the reaction product was taken out and cleaned with deionized water and then placed into an 80°C drying oven to be dried for 2h to obtain a cobalt oxalate precursor.
(3) The cobalt oxalate precursor was placed into a tubular furnace, and heated to 600°C at the heating rate of 10°C/min in the air atmosphere and held for 1.5h and then cooled down to room temperature to obtain a tricobalt tetraoxide precursor.
(4) The tricobalt tetraoxide precursor was placed into a hydrogen atmosphere tubular furnace with a flowrate of 25ml/min and then heated to 300°C at the heating rate of 5°C/min and held for 1h and then cooled down to room temperature so as to obtain a cobalt intermediate.
(5) The cobalt intermediate was soaked in a 30mM nickel nitrate solution for standing, and underwent constant temperature reaction for 24h at the temperature of 45°C. After the completion of the reaction, the reaction product was cleaned with deionized water and then placed into an 80°C drying oven to be dried for 2h to obtain an integral catalyst with porous core-shell structure.

### Example 8

(1) A cobalt sheet of 0.5×3cm² was taken and ultrasonically cleaned with anhydrous ethanol and deionized water respectively for 10min and dried for later use.
(2) The cleaned cobalt sheet was immersed in 50ml of 20mM oxalic acid solution for standing and underwent constant temperature reaction for 1h at the temperature of 60°C. After the completion of the reaction, the reaction product was taken out and cleaned with deionized water and then placed into an 80°C drying oven to be dried for 2h to obtain a cobalt oxalate precursor.
(3) The cobalt oxalate precursor was placed into a tubular furnace, and heated to 200°C at the heating rate of 5°C/min in the air atmosphere and held for 3h and then cooled down to room temperature to obtain a tricobalt tetraoxide precursor.
(4) The tricobalt tetraoxide precursor was placed into a hydrogen atmosphere tubular furnace with a flowrate of 20ml/min and then heated to 200°C at the heating rate of 5°C/min and held for 3h and then cooled down to room temperature so as to obtain a cobalt intermediate.
(5) The cobalt intermediate was soaked in a 20mM nickel nitrate solution for standing, and underwent constant temperature reaction for 40h at the temperature of 20°C. After the completion of the reaction, the reaction product was cleaned with deionized water and then placed into an 80°C drying oven to be dried for 2h to obtain an integral catalyst with porous core-shell structure.

### Example 9

(1) The integral catalyst with porous core-shell structure prepared in the example 1 was mounted as an anode on an electrochemical working station. The electrolyte was 20ml of 1M KOH solution, a platinum sheet was used for the electrode, and a mercury mercuric oxide electrode was used for a reference electrode. An area of the catalyst immersed in the electrolyte was 1×0.5cm², and stirred by magneton at a rotation speed of 600rpm.
(2) Under the constant voltage of 1.375 V (the electrode potential herein is relative to the reversible hydrogen electrode), activation was performed for 2000s to obtain an activated porous catalyst.
(3) By the linear scanning method of the electrochemical working station, an LSV curve was obtained, with a scanning rate of 5 mV/s and a scanning range of -0.525~0V. The LSV curve is as shown in FIG. 4 and the result shows the integral catalyst with porous core-shell structure has a very low electrochemical onset potential and a very high current density, with its performance far surpassing the industrial current density standard.

### Example 10

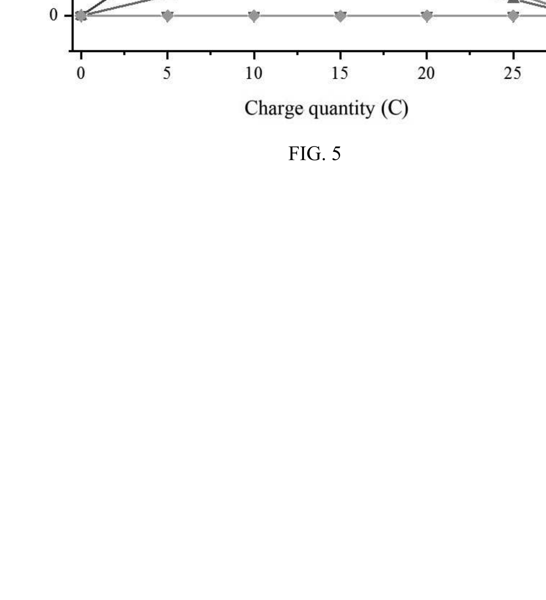

(1)Into 5 mL of 1 M KOH solution was added 5-hydroxymethylfurfural until the concentration of 5-hydroxymethylfurfural reached 10mM, and then used as an electrolyte.
(2) The integral catalyst with porous core-shell structure prepared in the example 1 was used as an anode and immersed with 1×0.5cm² in the electrolyte, with a platinum sheet as counter electrode and a saturated calomel electrode as a reference electrode, and stirred by a magneton at a stirring speed of 600rpm.
(3) The working voltage was set to 1.35V and electrolyzed for 1.07h, showing an electrolysis result as shown in FIG. 5, where "HMF" was 5-hydroxymethylfurfural, "FDCA" was 2,5-furandicarboxylic acid, "FFCA" was 5-formyl-2-furancarboxylic acid, "DFF" was 2,5-diformylfuran, and "HMFCA" was 5-hydroxymethyl-2-furancarboxylic acid. The result showed that the conversion rate of 5-hydroxymethylfurfural reached 100%, and the yield of 2,5-furandicarboxylic acid reached 92.1%. It can be seen that the catalyst has very high selectivity on 2,5-furandicarboxylic acid, with a high-purity product.

### Example 11

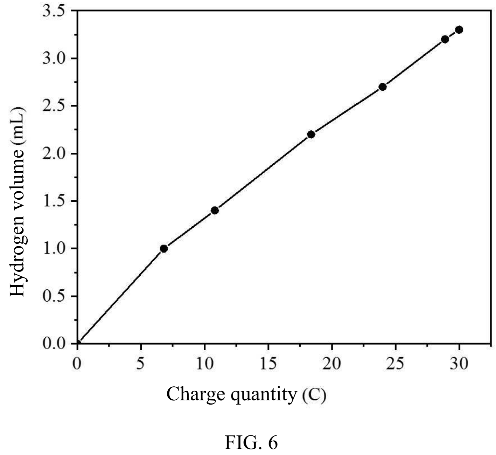

(1) Into 5 mL of 1 M KOH solution was added 5-hydroxymethylfurfural until the concentration of 5-hydroxymethylfurfural reached 10mM, and then used as an electrolyte.
(2) Two integral catalysts with porous core-shell structure prepared in the example 1 were used as a cathode and an anode respectively and assembled with the above electrolyte into a separator-free dual-electrode system, where the catalyst was immersed with 1×0.5cm² in the electrolyte.
(3) The working voltage was set to 1.35V and stirred by magneton at a rotation speed of 600rpm for coupled electrolysis while 2,5-furandicarboxylic acid and hydrogen were produced. The anode electrolysis result was the same as in the example 10. The hydrogen obtained by the cathode electrolysis and the charge quantity running therethrough were shown as the curve in FIG. 6, and the Faraday efficiency reached 90.1%. The result showed that the integral catalyst with porous core-shell structure has a high catalytic activity on water and biomass, and thus can realize synchronous efficient preparation of hydrogen and high-purity bio-based platform compound.

### Example 12

This example differs from the example 11 in that: the integral catalyst with porous core-shell structure prepared in the example 2 is used as a cathode and an anode respectively and the working voltage is set to 1.5V. The electrolysis result shows that the conversion rate of the HMF is 100%, the yield of the FDCA is 91.5%, and the Faraday efficiency of the hydrogen evolution is 91.1%.

### Example 13

This example differs from the example 11 in that: the integral catalyst with porous core-shell structure prepared in the example 3 is used as a cathode and an anode respectively and the working voltage is set to 1.6V. The electrolysis result shows that the conversion rate of the HMF is 99.5%, the yield of the FDCA is 90.8%, and the Faraday efficiency of the hydrogen evolution is 92.3%.

### Example 14

This example differs from the example 11 in that: the integral catalyst with porous core-shell structure prepared in the example 4 is used as a cathode and an anode respectively and the working voltage is set to 1.8V. The electrolysis result shows that the conversion rate of the HMF is 100%, the yield of the FDCA is 93.0%, and the Faraday efficiency of the hydrogen evolution is 96.7%.

### Example 15

This example differs from the example 11 in that: the integral catalyst with porous core-shell structure prepared in the example 5 is used as a cathode and an anode respectively and the working voltage is set to 1.35V. The electrolysis result shows that the conversion rate of the HMF is 98.9%, the yield of the FDCA is 89.7%, and the Faraday efficiency of the hydrogen evolution is 94.4%.

### Example 16

This example differs from the example 11 in that: the integral catalyst with porous core-shell structure prepared in the example 6 is used as a cathode and an anode respectively and the working voltage is set to 1.35V. The electrolysis result shows that the conversion rate of the HMF is 96.5%, the yield of the FDCA is 87.6%, and the Faraday efficiency of the hydrogen evolution is 89.5%.

### Example 17

This example differs from the example 11 in that: the integral catalyst with porous core-shell structure prepared in the example 7 is used as a cathode and an anode respectively and the working voltage is set to 1.35V. The electrolysis result shows that the conversion rate of the HMF is 100%, the yield of the FDCA is 92.5%, and the Faraday efficiency of the hydrogen evolution is 91.2%.

### Example 18

This example differs from the example 11 in that: the integral catalyst with porous core-shell structure prepared in the example 8 is used as a cathode and an anode respectively and the working voltage is set to 1.35V. The electrolysis result shows that the conversion rate of the HMF is 100%, the yield of the FDCA is 90.7%, and the Faraday efficiency of the hydrogen evolution is 92.8%.

Although the descriptions of the present disclosure are made as above, the scope of protection of the present disclosure is not limited hereto. Those skilled in the arts can, without departing from the spirit and scope of the present disclosure, make various changes and modifications, and such changes and modifications shall fall within the scope of protection of the present disclosure.

## Claims

1. A preparation method of an integral catalyst with porous core-shell structure, wherein the method includes the following steps:
at step S1, immersing a metal cobalt substrate in an oxalic acid solution, and growing a cobalt oxalate micron wire or micron rod on a surface of the metal cobalt substrate to obtain a cobalt oxalate precursor;
at step S2, performing high-temperature calcination on the cobalt oxalate precursor in an air atmosphere to obtain a tricobalt tetraoxide precursor with porous structure;
at step S3, placing the tricobalt tetraoxide precursor into a high-temperature hydrogen atmosphere for reduction to obtain a cobalt intermediate with stable porous structure;
at step S4, soaking the cobalt intermediate in a nickel salt solution, and epitaxially growing a cobalt-nickel nano structure on a surface of the cobalt micron wire or micron rod to obtain an integral catalyst with porous core-shell structure.

2. The preparation method of an integral catalyst with porous core-shell structure of claim 1, wherein the step S2 specifically includes: placing the cobalt oxalate precursor into a tubular furnace and heating to 100 to 800°C at a heating rate of 1 to 10°C/min in the air atmosphere and holding the temperature for 1 to 5h and then cooling down to room temperature to obtain a tricobalt tetraoxide precursor.

3. The preparation method of an integral catalyst with porous core-shell structure of claim 1, wherein the step S3 specifically includes: placing the tricobalt tetraoxide precursor into a tubular furnace, and heating to 100 to 550°C at the heating rate of 1 to 10°C/min in the hydrogen atmosphere, and holding the temperature for 1 to 5h and then cooling down to room temperature to obtain a cobalt intermediate.

4. The preparation method of an integral catalyst with porous core-shell structure of claim 1, wherein the metal cobalt substrate is selected from any one of metal cobalt foam, cobalt sheet, cobalt foil and cobalt net.

5. The preparation method of an integral catalyst with porous core-shell structure of claim 1, wherein in the step S1, a molar ratio of the metal cobalt substrate to oxalic acid is 1:5.5 to 28.

6. The preparation method of an integral catalyst with porous core-shell structure of claim 5, wherein in the step S1, the reaction time of the epitaxial growth is 0.25 to 4h, and the reaction temperature is 20 to 80°C.

7. The preparation method of an integral catalyst with porous core-shell structure of claim 1, wherein in the step S4, the concentration of the nickel salt solution is 10 to 30mM, and the solute of the nickel salt solution is selected from any one or combination of nickel sulfate, nickel nitrate, and nickel chloride.

8. The preparation method of an integral catalyst with porous core-shell structure of claim 7, wherein in the step S4, the reaction temperature of the epitaxial growth is 10 to 60°C and the reaction time is 10 to 80h.

9. An integral catalyst with porous core-shell structure, wherein the catalyst is prepared by the method of any one claim of claims 1-8.

10. An application of an integral catalyst with porous core-shell structure, wherein the application is to use the integral catalyst with porous core-shell structure of claim 9 as a cathode of an electrolysis system to perform electrolytic hydrogen evolution; or,
the integral catalyst with porous core-shell structure is used as an anode of the electrolysis system to perform biomass oxidation; or,
the integral catalyst with porous core-shell structure is used as an anode and a cathode of the electrolysis system respectively to perform electrolytic hydrogen evolution and biomass oxidation at the same time.
